**Europäisches Patentamt**

**European Patent Office**

**Office européen des brevets**

(11) Veröffentlichungsnummer: **0 279 021**
**A2**

# (12) EUROPÄISCHE PATENTANMELDUNG

(21) Anmeldenummer: 87113431.8

(22) Anmeldetag: 15.09.87

(51) Int. Cl.⁴: **B67C 1/18 , C02F 9/00**

(30) Priorität: 18.02.87 DE 3705087

(43) Veröffentlichungstag der Anmeldung:
24.08.88 Patentblatt 88/34

(84) Benannte Vertragsstaaten:
**AT BE DE FR IT NL**

(71) Anmelder: **Turbon-Tunzini Klimatechnik GmbH**
**Carl-Diem-Weg 18-24**
**D-5060 Bergisch Gladbach 2(DE)**

(72) Erfinder: **Mäueler, Axel**
**Wichlinghauser Schulstrasse 132**
**D-5600 Wuppertal 2(DE)**
Erfinder: **Brunk, Marten, Dr.**
**Röntgenstrasse 6**
**D-5060 Bergisch Gladbach 2(DE)**
Erfinder: **Klein, Thomas**
**Sebastianusweg 3**
**D-5253 Lindlar(DE)**

(74) Vertreter: **Müller, Jürgen, Dipl.-Ing.**
**Deutsche Babcock AG Lizenz- und**
**Patentabteilung Duisburger Strasse 375**
**D-4200 Oberhausen 1(DE)**

(54) **Verfahren zur Befreiung einer Lauge in Reinigungsmaschinen von Metallen.**

(57) Das angegebene Verfahren dient zur Befreiung einer Lauge in Reinigungsmaschinen, insbesondere Flaschenreinigungsmaschinen, von gelösten und nicht gelösten Metallen, insbesondere Aluminium, bei gleichzeitig möglichst gering gehaltenem Laugeverlust und nicht erforderlichem Unterbrechen des Reinigungsvorgangs. Dabei wird ein Teilstrom der Lauge aus den Maschinen abgezogen und in einer Schmutzaustragungsanlage (1) von groben Verunreinigungen und nicht gelösten Metallen befreit. Der Lauge wird in Wasser aufgeschlämmter, ungelöschter Kalk zugesetzt, woraufhin die so behandelte Lauge in ein Reaktionsgefäß (4) gelangt, in dem in kurzer Zeit die gelösten Metalle, insbesondere Aluminium durch chemische Reaktion in eine ungelöste Form gebracht werden. Nach Passieren einer Flockungsmittelstation (2), wobei der Lauge ein polymeres Flockungsmittel zugeführt wird, wird das dann vorliegende Lauge-Schlammgemisch in eine Eindickanlage verbracht, in der der Schlamm weiter eingedickt wird, so daß sich die im oberen Teil des Eindickturms (5) ansammelnde, durch die chemische Reaktion regenerierte und aufkonzentrierte Reinlauge kontinuierlich abgezogen und nach Zwischenlagerung im Reinlaugebehälter (6) wieder der Reinigungsmaschine zugeführt wird. Der sich im Eindickturm (5) ansammelnde Schlamm wird an einer nachgeschalteten Flockungsmittelstation (7) vorbeigeführt, bei der dem Schlamm ein polymeres Flockungsmittel zugegeben wird. Der Schlamm wird anschließend in einem Siebcontainer (8) entwässert.

## Verfahren zur Befreiung einer Lauge in Reinigungsmaschinen von Metallen

Die Erfindung betrifft ein Verfahren zum Befreien einer Lauge in Reinigungsmaschinen, insbesondere in Flaschenreinigungsmaschinen, von gelösten und ungelösten Metallen, insbesondere Aluminium mit den Merkmalen des Oberbegriffes des Anspruches 1.

Bei einem bekannten Verfahren (Brauwelt Nr. 24/25 1984 Seiten 1060 ff) zur Befreiung der Lauge in Reinigungsmaschinen von Aluminium wird eine Teilmenge der Lauge mit $CO_2$ neutralisiert. Dabei wird das enthaltene Aluminiumhydroxid unlöslich und fällt aus. Die Ausfällung muß dann durch Siebband/Faservliesfilter (z.B. "Polo"-Saugbandfilter) und/oder Schichten/Membranfilter ausgefiltert werden. Die dabei anfallenden Filterschichten müssen mit dem Filterrückstand deponiert werden, während das Filtrat in die Reinigungsmaschine zurückgeführt wird. Dieses Verfahren weist den Nachteil auf, daß bei der Neutralisation der Lauge mit $CO_2$ oder anorganischen Säuren unter Verminderung der Laugenkonzentration lösliche Salze entstehen, die eine sehr viel geringere Reinigungswirkung als die Lauge haben. Die in der Lauge verbleibenden löslichen Salze erfahren durch die immer wieder erfolgende Rückführung in die Reinigungsmaschine eine Kumulation und bedingen schließlich einen Austausch der gesamten Reinigungslauge. Das Ausfiltern des ausgefallenen und in feinstverteilter Form vorliegenden Hydroxids ist aufwendig und mit hohen laufenden Kosten verbunden.

Weiterhin ist ein Verfahren bekannt (Brauwelt Nr. 24/25) 1984, Seite 1060 ff), bei dem das gesamte Laugenvolumen einer Reinigungsmaschine in einen Absetztank abgelassen wird, aus dem nach einiger Zeit aus dem unteren Bereich ein Teilstrom entnommen und mit Kalk oder Kalkmilch versetzt wird. Dabei fällt gelöstes Aluminium als Calciumaluminat in feinverteilter Form bei gleichzeitigem Freisetzen der durch das Aluminium gebundenen Lauge aus. Die Ausfällung wird durch Siebband-Faservließfilter (z.B. "Polo-Saugbandfilter) und/oder Schichten/Membranfilter ausgefiltert. Die dabei anfallenden hochalkalischen Filterschichten müssen mit dem Filterrückstand anschließend auf eine Deponie verbracht werden. Nachteilig an diesem System ist, daß dafür gesorgt werden muß, daß auf keinen Fall Calciumhydroxid in die Reinigungsmaschine eingebracht werden darf, da diese sonst mit dort vorhandener amorpher Kieselsäure und Tonerde zu einer Steinbildung führt, die fast nicht entfernbar ist und zur Stillegung der Reinigungsmaschine führen kann. Die somit notwendige Entfernung von Calciumhydroxid durch Filtration erfordert einen hohen apparativen Aufwand mit entsprechend hohen laufenden Kosten. Ebenso bedingt die Entsorgung der alkalischen Filterschichten samt Rückständen einen höheren Aufwand als die neutraler. Außerdem wirkt sich nachteilig für das bekannte Verfahren aus, daß die gesamte Lauge der Reinigungsmaschine in einen Absetztank abgelassen werden muß, in dem es nur zu einer Sedimentation durch Schwerkraft kommt und dadurch die feinstverteilten Aluminiumpartikel in der eingebrachten Lauge nicht erfaßt und somit aufgelöst und in Lösung gebracht werden. Während dieser Behandlungsdauer, zu der noch die Zeit für das zweimalige Umpumpen der gesamten Laugenmenge kommt, steht die Reinigungsmaschine still, so daß die Behandlung nur einmal wöchentlich vorgenommen werden kann, ungeachtet der durch unterschiedlich hohen bzw. höheren Eintrag von Aluminium in die Reinigungsmaschine gegebenenfalls bedingten mehrmaligen Entaluminierung der Lauge pro Woche, was zu einer Kumulation (Stapelung) von gelöstem Aluminium in der Reinigungslauge führt.

Der Erfindung liegt die Aufgabe zugrunde, ein Verfahren zum Entfernen von gelösten Metallen, insbesondere Aluminium, aus Reinigungslaugen anzugeben, bei dem sämtliche in der Lauge befindlichen Partikel, auch in Schwebe gehaltene Metalle, entfernt werden bei gleichzeitig möglichst gering gehaltenem Laugeverlust und nicht erforderlichem Unterbrechen des Reinigungsvorgangs.

Die Aufgabe wird bei einem gattungsgemäßen Verfahren durch die kennzeichnenden Merkmale des Anspruchs 1 gelöst. Durch die Verwendung einer Eindickanlage wird erreicht, daß die bei der chemischen Reaktion ausfallenden Metallsalze zusammen mit allen in Schwebe befindlichen Partikeln sedimentiert und dann soweit konzentriert werden, daß man sie als stichfestes Sediment entsorgen kann. Durch die starke Konzentration der Schmutz-und Sedimentanteile in der Eindickanlage wird weiterhin erreicht, daß der Laugeverlust gering gehalten wird, weil in dem sich ansammelnden Dickschlamm kaum noch Reinigungslauge enthalten ist. Weiterhin muß nur noch ein Teilstrom aus der Reinigungsmaschine entnommen werden, so daß der Reinigungsvorgang nicht unterbrochen werden muß und durch wiederholtes Behandeln eines neu entnommenen Teilstromes der Metallgehalt der gesamten Lauge nahezu auf Null gebracht werden kann, was weiterhin den Vorteil hat, daß man nur noch mit einer genau 2%igen Lauge zu reinigen braucht, anstatt mit bisher üblich viel höher konzentrierter Lauge, bei der sich aufgrund des Verbrauchs von lauge durch Auflösen von Metallen praktisch wieder eine etwa 2%ige Lauge ergibt.

Das so erhaltene, hochalkalische stichfeste Sediment muß anschließend auf einer Sondermülldeponie gelagert werden, wohingegen die gemäß Anspruch 2 vorgesehene Neutralisationsanlage darüber hinaus ermöglicht, daß das Sediment soweit entsorgt ist, daß es als Normalmüll auf jeder Mülldeponie gelagert werden kann, was eine erhebliche Kosteneinsparung bedeutet.

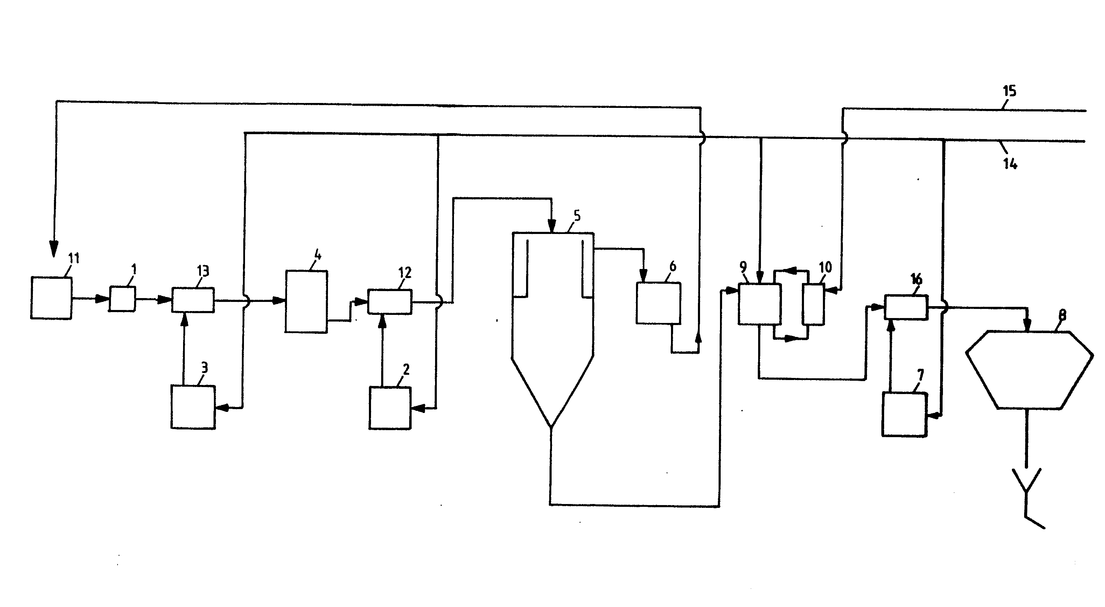

Die Erfindung wird an einem Ausführungsbeispiel und dem in der Zeichnung dargestellten Flußdiagramm im folgenden näher erläutert.

Aus einer heißen Reinigungslauge z. B. einer Flaschenreinigungsmaschine 11 wird ein Teilstrom entnommen und von einer Pumpe in die Rohrleitung zu einem Reaktionsgefäß 4 gefördert. Einige der Flaschenreinigungsmaschinen können nun lediglich leicht verschmutzte Lauge mit sich führen, während andere Flaschenreinigungsmaschinen erhebliche Schmutzbelastungen bis hin zu Großscherben, Kronenkorken und Etiketten mit sich führen. Im gezeigten Ausführungsbeispiel ist deshalb eine Bandsieb-Schmutzaustragungsanlage 1, beispielsweise eine Kettenförderanlage, direkt neben der Flaschenreinigungsmaschiane 11 aufgebaut, der die Lauge durch Schwerkraft zufließt, um mitgeführte Grobverschmutzungen und nicht gelöste Metalle von dem Reaktionsgefäß 4 fernzuhalten.

Der so vorbehandelten Lauge wird in einem ersten Koagulator 13 Kalk, im Anwendungsfall ungelöschter Kalk zugesetzt. Dieser ungelöschte Kalk wird hierfür zuvor in einer Kalkaufschlämmstation 3 in der benötigten Menge unter ständigem Rühren gleichmäßig mit Wasser vermischt. Da es sich hierbei um einen exothermen Vorgang handelt, muß der Kalk durch einen geeigneten Dosierer, z. B. einen drehzahlgeregelten Schneckenförderer, in einem ständigen und mengenmäßig nicht zu hoch bemessenen Strom einer der zu behandelnden Menge Lauge entsprechenden und zuvor in der Aufschlämmstation 3 vorgelegten Menge Wasser zugeführt werden. Dieses geschieht unter ständigem, intensiven Rühren mittels eines eingebauten Rührwerkes, um die bei dieser chemischen Reaktion freiwerdenden Wärme möglichst sofort gleichmäßig zu verteilen.

Dieses Lauge-Kalkmilchgemisch gelangt in das Reaktionsgefäß 4, in welchem es unter langsamen Rühren mittels eines Spezialrührwerkes so lange verbleibt, bis das gesamte gelöste Aluminium ausgefällt worden ist, was anhand einer chemischen Titration ermittelt wird.

Der ungelöschte Kalk kann direkt in das Reaktionsgefäß 4 zugegeben werden. In diesem Fall ist aber die Erwärmung durch die Kalkzugabe zu beachten und die Auflösung des Kalkes zu kontrollieren.

Das das Reaktionsgefäß 4 verlassende Gemisch wird dann durch einen zweiten Koagulator 12 geführt, in dem die Zugabe von Flockungsmittel erfolgt. Das Flockungsmittel, ein polymerer Elektrolyt, wird zuvor in einer Flockungsmittelauflösestation 2 unter proportionaler Zugabe von Wasser angesetzt und mittels eines Rührwerkes gleichmäßig vermischt. Die Aufbereitung des Flockungsmittels läuft zeitlich vorversetzt zur Entnahme des Teilstromes der Lauge ab. Die Dosierung des Flockungsmittels erfolgt mittels einer Dosierpumpe proportional zur Menge der zu behandelnden Lauge.

Das dann vorliegende Lauge-Schlammgemisch wird mittels einer Pumpe, beispielsweise einer Membranpumpe, einem Eindickturm 5 zugeführt. Dieser Eindickturm 5 ist im wesentlichen ein zylindro-konischer Behälter, in dem die zulaufende Flüssigkeit über innere Einbauten bis zum Bodenbereich geführt und über ein Innenrohr wieder nach oben geleitet wird. Der Überlauf befindet sich seitlich im oberen Bereich des Behälters.

Über die hervorgerufene Verdrängungsströmung wird eine weitere Sedimentation im Konusbereich des Eindickturms 5 erreicht, die unterstützt durch das Flockungsmittel, alle in Schwebe befindlichen Teilchen erfaßt. Die überlaufende Lauge, die durch die chemische Reaktion regeneriert, d. h. höher konzentriert als bei Entnahme aus der Reinigungsmaschine, ist, wird einem Reinlaugebehälter 6 zugeführt, von wo aus sie mittels einer Pumpe wieder in die Reinigungsmaschine zurückgepumpt werden kann. Der sich im Konusbereich des Eindickturms 5 ansammelnde hochalkalische Schlamm wird bei Bedarf abgezogen und entsorgt, so daß der gesamte Laugeninhalt der Reinigungsmaschine aufgrund dieses Verfahrens nur noch um den in dem Dickschlamm enthaltenen, geringen Laugenanteil ergänzt werden muß.

Der sich im Eindickturm 5 sammelnde Schlamm wird bei Bedarf mit Hilfe einer Dickstoffpumpe in einen Neutralisationsbehälter 9 gefördert. Der Neutralisationsbehälter 9 ist mit einem Kaltwasseranschluß 14 und einem Rührwerk versehen, um die Dickmasse aufzudünnen und die Temperatur abzusenken. Dieser Verfahrensschritt dient zur Entlastung der nachgeschalteten Neutralisationspumpe.

Die Neutralisation des aufgedünnten Schlamms erfolgt im Umpumpverfahren über einen Reaktor 10 unter geregelter Zugabe von $CO_2$-Gas oder anderer geeigneter Chemikalien über eine Rohrleitung 15. Der anfängliche pH-Wert von etwa 13,7 wird damit auf einen pH-Wert von 9 reduziert. Die Reduktion des pH-Wertes erfolgt durch automatische Regelung über eine nicht gezeigte Leitfähigkeitsmeßstation. Nach erfolgter Neutralisation und Abkühlung ist der Schlamm für die anschließende Entsorgung aufbereitet.

Der aufbereitete Dünnschlamm im Neutralisationsbehälter 9 wird in den Siebcontainer 8 entsorgt. In der hierfür erforderlichen Rohrleitung ist ein Koagulator 16 für die Zugabe von Flockungsmittel installiert. Das Flockungsmittel, ein polymerer Elektrolyt, wird zuvor in einer Flockungsmittelauflösestation 7 unter proportionaler Zugabe von Wasser angesetzt und mittels eines Rührwerkes gleichmäßig vermischt. Die Aufbereitung des Flockungsmittels läuft zeitgleich mit der Neutralisationsphase ab, so daß eine Entsorgung in den Siebcontainer 8 unmittelbar nach Beendigung der Neutralisation des aufgedünnten Schlamms erfolgen kann. Die Dosierung des Flockungsmittels erfolgt mittels einer Dosierpumpe proportional zur Menge des zu entsorgenden neutralisierten Schlamms.

Der mit dem Flockungsmittel versetzte Schlamm wird anschließend direkt dem Siebcontainer 8 zugeführt. Der Siebcontainer ist ein genormter Abfallcontainer, der innen mit einer wasserdurchlässigen Auskleidung versehen ist. Im Container erfolgt eine Trennung in feste und flüssige Phase zunächst durch Schwerkraft. Die feste Phase wird im Siebcontainer 8 zurückgehalten, während die flüssige Phase, nämlich neutralisiertes, relativ sauberes Abwasser, durch die Auskleidung hindurchtritt und über einen Ablauf der Kanalisation zugeführt wird. Der im Container verbleibende Schlamm wird innerhalb weniger Stunden stichfest und kann auf einer Normalmülldeponie entsorgt werden.

Eine Flockung des Schlammes im hochalkalischen Bereich, also ohne vorgeschaltete Neutralisation, ist technisch zwar ebenfalls realisierbar, jedoch muß der dann anfallende Schlamm auf einer Sondermülldeponie entsorgt werden.

Sämtliche Behälter und Leitungen können zur Vermeidung von Wärmeverlusten mit einer Isolation versehen werden. Für die Regelung der gesamten Aluminiumfällanlage ist ein frei programmierbares System einsetzbar, wobei die einzelnen Regelungs-und Steuerungskreise auf frei wählbare Bedienebenen aufgeteilt werden können. Auch ist ein vollautomatischer Betrieb mit Einrichtung einer zentralen Bedien-und Überwachungseinheit technisch ebenfalls leicht zu realisieren.

Das beschriebene Verfahren kann mit einem anderen, z. B. mit dem in der deutschen Patentanmeldung P 36 33 652.1 offenbarten Verfahren zur Entsorgung von Lauge aus Reinigungsmaschinen kombiniert werden, indem die nach dem anderen Verfahren behandelte Lauge und das aus dem Koagulator12 austretende Lauge/Kalk/Flockungsmittel/Gemisch in einen gemeinsamen Eindickturm eingespeist werden.

## Ansprüche

1. Verfahren zur Befreiung einer Lauge in Reinigungsmaschinen, insbesondere Flaschenreinigungsmaschinen, von gelösten und nicht gelösten Metallen, insbesondere Aluminium, bei dem durch Zugabe von Kalk die gelösten Metalle durch chemische Reaktion in eine ungelöste Form gebracht werden und aus dem entstehenden Lauge-Schlammgemisch der Schlamm abgetrennt wird, dadurch gekennzeichnet, daß ein Teilstrom der Lauge kontinuierlich oder diskontinuierlich aus den Maschinen abgezogen wird, in einer Schmutzaustragungsanlage (1) von groben Verunreinigungen und nicht gelösten Metallen befreit wird, die Lauge in einem Reaktionsgefäß (4) mit dem Kalk behandelt wird, das entstehende Lauge-Schlammgemisch in eine Eindickanlage verbracht wird, in der der Schlamm weiter eingedickt wird, daß eine im oberen Teil des Eindickturms (5) sich ansammelnde, durch die chemische Reaktion regenerierte und aufkonzentrierte Reinlauge kontinuierlich abgezogen und nach Zwischenlagerung in einem Reinlaugebehälter (6) wieder der Reinigungsmaschine zugeführt wird, der sich im Eindickturm (5) ansammelnde Schlamm an einer nachgeschalteten Flockungsmittelstation (7) vorbeigeführt wird, bei der dem Schlamm ein polymeres Flockungsmittel zugegeben wird, und daß der Schlamm anschließend in einem Siebcontainer (8) entwässert wird.

2. Verfahren nach Anspruch 1, dadurch gekennzeichnet, daß der sich im Eindickturm ansammelnde Schlamm zuerst einem Neutralisationsbehälter (9) zugeführt wird, in dem der Schlamm mit Wasser verdünnt und nach Zugabe von $CO_2$-Gas oder anderer chemischer Substanzen in einem Reaktor (10) neutralisiert wird, und daß dann der Schlamm an der nachgeschalteten Flockungsmittelstation (7) vorbeigeführt und in dem Siebcontainer (8) entwässert wird.

3. Verfahren nach Anspruch 1 und 2, dadurch gekennzeichnet, daß die zu behandelnde Lauge vor oder vorzugsweise hinter dem Reaktionsgefäß (4) an einer Flockungsmittelstation (2) vorbeigeführt wird, wobei der Lauge ein polymeres Flockungsmittel zugeführt wird.

4. Verfahren nach den Ansprüchen 1 bis 3, dadurch gekennzeichnet, daß ungelöschter Kalk in einer Aufschlämmstation (3) in Wasser aufgeschlämmt wird und die Aufschlämmung der Lauge zugesetzt wird.

5. Verfahren nach den Ansprüchen 1 bis 3, dadurch gekennzeichnet, daß ungelöschter Kalk direkt in das Reaktionsgefäß (4) zudosiert wird.

6. Verfahren nach den Ansprüchen 1 bis 5, dadurch gekennzeichnet, daß der Schlamm in dem Siebcontainer (8) nach einer bestimmten Entwässerungszeit soweit entwässert wird, daß der entwässerte Schlamm stichfest ist.

0 279 021